# EUROPEAN PATENT APPLICATION

(11) **EP 3 009 952 A1**
(43) Date of publication of application: **20.04.2016**
(21) Application number: 14188824.8
(22) Date of filing: 14.10.2014
(51) Int. Cl.: G06F 21/52

(54) **System and method for protecting a device against attacks on procedure calls by encrypting arguments**

(71) Applicant: Gemalto SA, 92190 Meudon (FR)
(72) Inventor: D'Annoville, Jérôme, 92190 Meudon (FR)
(74) Representative: Lotaut, Yacine Diaw

(57) **Abstract**

A system, method and computer-readable storage medium with instructions for operating an electronic device to protect against attacks that alter flow-of-control of procedure calls by encrypting the arguments using a key unique to the calling code. Other systems and methods are disclosed.

## Description

### BACKGROUND OF THE INVENTION

The present invention relates generally to protecting electronic devices against attacks designed to discern secret information stored on the electronic devices, and in particular, to protecting an electronic device from attacks on procedure calls by cryptographically protecting the procedure call arguments.

Electronic communication and commerce are powerful yet dangerous tools. With the wide-spread availability of network technology, such as the Internet, there is an ever increasing use of online tools for communication and commerce. Each year more users find it easier or quicker to conduct important transactions, whether in the form of correspondence or commerce, using computers and other computerized devices over computer networks. However, there is always the risk that the security of electronic transactions can be compromised through interception by third parties who do not have the right to partake in the transactions. When malicious third parties obtain access to otherwise private transactions and data there is risk of economic loss, privacy loss, and even loss of physical safety. Cryptography is one mechanism employed to avoid intrusion into the privacy of electronic transactions and data.

One type of attack against the sensitive information that is stored in security devices is the so-called *Buffer Overflow Attack.* Buffer overflow is an attack model that is based on stack allocation. Buffer overflows occur when data is written outside of the allocated space for a particular data structure. If the operating system does not guard against such out-of-bounds writing of data, an attacker may write into the space that is intended as the return address for procedure calls. By doing so, the attacker may redirect the return to a malicious code, which would run with the same permissions and privileges as the targeted code. Thus, the malicious code may perform any function that can otherwise be programmed. One mechanism used to compromise security would be to open a remote shell on the compromised machine. In that case, the injected malicious code is referred to as shellcode.

In an embedded operating system - for example, IOS from Apple Inc., Cupertino, California, USA - some protections like address-space layout randomization (ASLR) and the fact that page code is not writable prevent attackers from tampering with applications to run malicious code. However, such protections can be circumvented by an attacker by tracking the existing application code using a debugger that causes the application to execute in a different order specified by the attacker.

From the foregoing it will be apparent that there is still a need for an improved technology to provide a secure mechanism that is computationally efficient, that does not require excessively large registers or other storage, and with which a portable security device - e.g., a mobile electronic device - has the capability to protect a stackframe from buffer overflow, stack overflow, and shellcode attacks.

### BRIEF DESCRIPTION OF THE DRAWINGS

Figure 1 is a schematic illustration of a telephony network in which a mobile electronic device is connected to other mobile electronic devices and to data servers.
Figure 2 is a schematic illustration of a high-level architecture of a mobile electronic device.
Figure 3 is a schematic illustration of programs stored in a memory of the mobile electronic device of Figure 2.
Figure 4 is a schematic illustration of a stackframe having an encrypted argument.
Figure 5 is a schematic illustration of a computer memory containing the caller code and an encryption key used to encrypt the argument of Figure 4.
Figure 6 is a flow-chart illustrating the steps of using the encryption key of Figure 5 to encrypt the argument of Figure 4 and decrypting the argument in the callee code.
Figure 7 is a flow-chart illustrating the steps of determining the encryption key of Figures 5 and 6.
Figure 8 is an illustration of an alternative embodiment in which the location of the code to be hashed, in order to determine the encryption and decryption keys, is passed to the callee on the stack.
Figure 9 is a schematic illustration of a computer memory containing the caller code and the code which is hashed to determine the encryption and decryption keys of Figures 8.
Figure 10 is a flow-chart illustrating the steps of determining and passing the code section used to determine the encryption key of Figure 9, encrypting the argument of Figure 8 and passing identification of the code section used to determine encryption key to the callee code.

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

In an embodiment of the invention, a technology is provided that enables the use of mobile electronic devices, such as mobile telephones, and other electronic computerized devices, to be used to digitally encrypt arguments to a callee routine using a key that is unique to the caller routine thereby ensuring that the callee routine only functions correctly if the arguments are decrypted using the key that corresponds to the caller routine. The key incorporates the return pointer in some fashion thereby ensuring that if the return pointer has been manipulated, the decryption of the arguments fail and likely result in a fault before control is returned, i.e., before transfer to the manipulated return pointer.

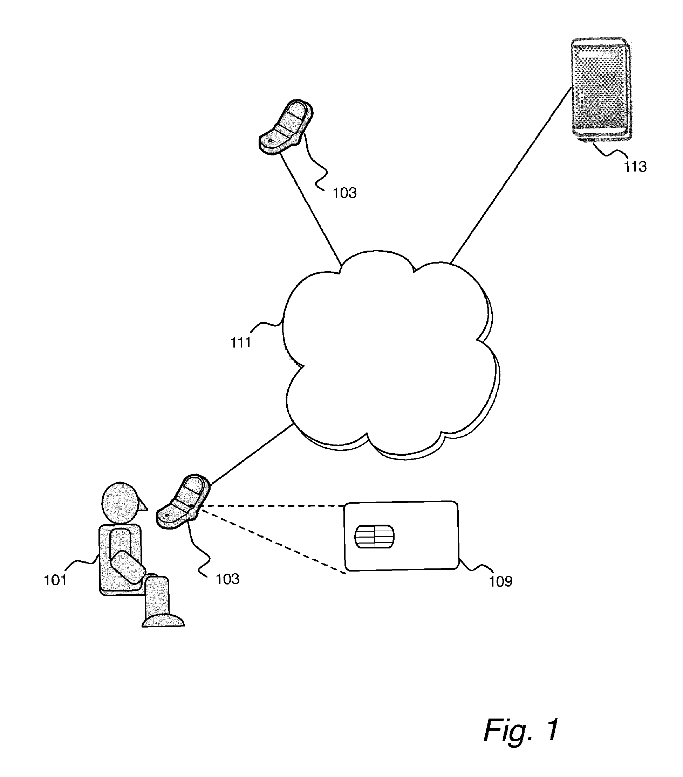

Figure 1 is a schematic illustration of a network 111 connecting a mobile device 103 with a portable security device 109, e.g., a smart card, connected thereto, to one or more remote servers 113. For illustrative purposes, we describe the technology presented herein as it may be used in a mobile device 103. However, the technology presented is applicable to any programmable electronic device subject to attacks against flow-of-control associated with procedure calls.

The mobile device 103 is operated by a user 101 who may interact with one of the servers 113 or another mobile device 103 over the network.

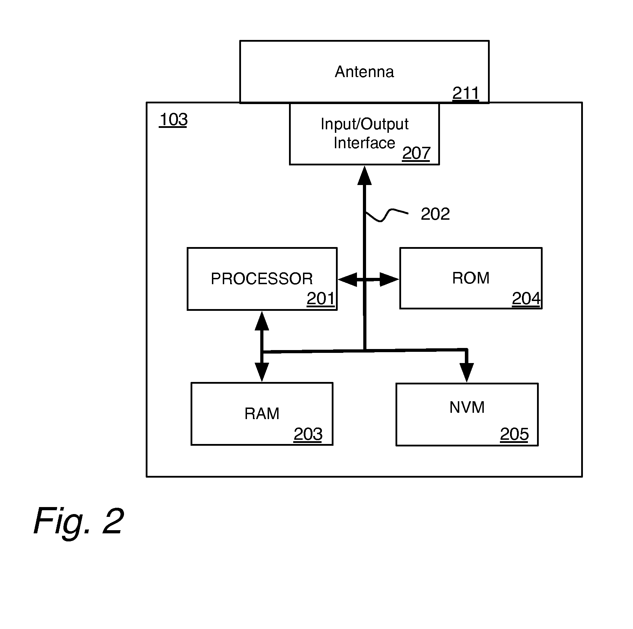

Figure 2 is a schematic illustration of a mobile device 103. The mobile device 103 may include a processor 201 connected via a bus 202 to a random access memory (RAM) 203, a read-only memory (ROM) 204, and a non-volatile memory (NVM) 205. The mobile device 103 further includes an input/output interface 207 for connecting the processor 201, again typically via the bus 202, to a connector 211 by which the mobile device 103 may be connected to a host computer or other peripheral device.

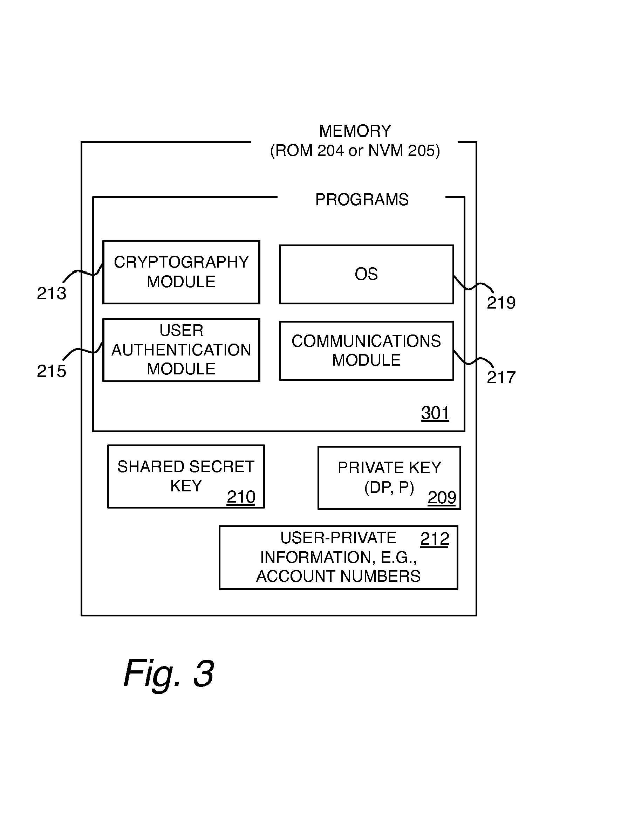

The NVM 205 and/or ROM 204 may include computer programs 301 as is illustrated in Figure 3. While it is here depicted that the computer programs 301 are all co-located in the ROM 204 or the NVM 205, in actual practice there is no such restriction as programs may be spread out over multiple memories and even temporarily installed in RAM 203. Furthermore, the mobile device 103 may include multiple ROMs or NVMs. The programs 301 include operating system programs as well as application programs loaded on to the mobile device 103. The NVM 205 or ROM 204 may also contain private data, such as a private key 209 or a shared secret key 210, stored either in its basic form or in derived quantities, as well as other user-private information 212 such as account numbers.

The mobile device 103 programs 301 may include a cryptography module 213, a user authentication module 215, a communications module 217, and the operating system OS 219.

In the course of performing, for example, cryptography operations, any of the programs 301, e.g., the cryptography module 213, may perform various forms of procedure calls. In a computer architecture in which procedure calls are based on a calling stack, the return address (i.e., the next instruction to be executed after conclusion of processing the called procedure) is placed on the stack in a structure commonly referred to as a *stack frame.* The stack frame typically contains - in order from bottom to top beginning with the caller's stack frame - caller routine's local variables, arguments to the callee, return address pointing to the next instruction to execute upon return from the callee (unless these are placed in another location such as in a register dedicated to that purpose), saved register values, and callee's local variables. A stack frame may have a different contents and order of elements.

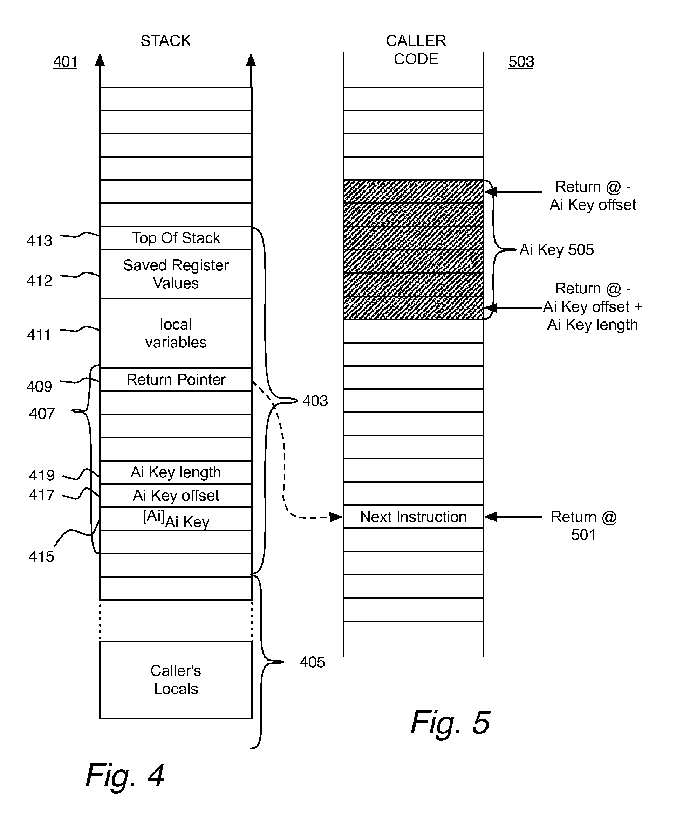

Figure 4 is an illustration of an example of a calling stack 401 according to an embodiment of the invention. The callee-stack frame 403 is pushed onto the stack above the caller-stack frame 405. The bottom of the callee-stack frame 403 contains the arguments 407. The return pointer 409, local variables 411 of the callee, and saved register values 412 are pushed above the return pointer 409. The return pointer 409 points to a location 501 in the caller code 503, illustrated in Figure 5; namely, the location of the caller code 503 that is the next location to execute after return of control to the caller code 503.

If the callee makes a procedure call, the stack frame for it will be placed on the top of the stack 413.

In a conventional calling procedure, the arguments are simply pushed onto the stack or placed in registers in embodiments where arguments (or some of the arguments) are passed via registers. However, according to the illustrated embodiment, an argument *Aᵢ* is encrypted using a key (*Aᵢ Key)* that is defined based on the return pointer. The encrypted argument *[Aᵢ]_{Ai Key}* 415 is pushed onto the stack or placed in a register, depending on the argument passing technique used. Thus, a manipulation of the return pointer would cause a manipulation of the key used for decrypting the argument. If the key has been manipulated, the argument will not decrypt correctly and a fault condition is very likely to occur, thus preventing transfer of control to the address reflected by the manipulated return pointer.

According to the embodiment of Figure 4, the encryption key 505 is located within the caller code 503. The starting location is defined by an offset with respect to the address held in the return pointer 409, i.e., the key 505 starts at *return address - Key offset for the argument key.* The offset (e.g., *Aᵢ Key offset* 417) is also pushed onto the stack, for example, above the encrypted argument [*Aᵢ*] *_{Ai Key}* 415 if arguments are passed to the callee via the stack. The key 505 is further defined by it's length, e.g., *Aᵢ Key length* 419, which is also pushed on to the stack, for example, above the offset.

When the callee retrieves the argument *Aᵢ*, if the return pointer 409 has been manipulated, the material that the callee retrieves for the key at *Return @* - *Aᵢ Key offset* to *Return* @ *- Aᵢ Key offset* + *Aᵢ Key length* would not be the same as the key used by the caller in encrypting the argument *Aᵢ*. Thus, the decryption would lead to unpredictable results as the callee code is executed. For example, it is likely to result in a fault thus causing the execution to abort before change of control to the address stored in the return pointer.

The stack-frames illustrated in Figure 4 are only examples. Many different structures are possible and there may be additional information stored in the stack frames that are not shown herein. Furthermore, as noted above, in some architectures, notably some RISC architectures, some arguments and return addresses may be placed in registers rather than in the stack frame.

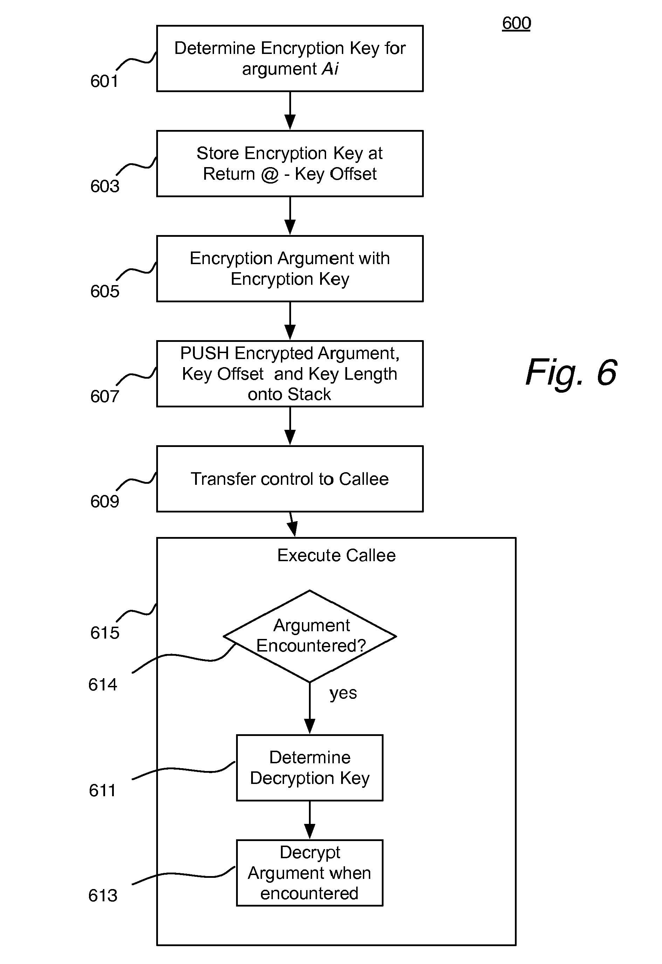

Figure 6 is a flow-chart illustrating the processing flow 600 corresponding to the embodiment illustrated in Figures 4 and 5. First, an encryption key is determined for an argument *Aᵢ*, step 601. The encryption key may be generated, for example, when the program is compiled, and stored, or it may simply be the material that is already stored in a particular location of the caller code. Figure 6 illustrates the former alternative; the generated key is stored at the location *Return Address* - *Key Offset,* step 603. In the other alternative, the key is defined by the contents at *Return Address - Key Offset* followed by data of length *Key Length*.

Note that in the example of Figure 6, arguments and return addresses are stored on the stack. In alternative implementations, arguments and return addresses may be stored and passed between caller and callee, for example, in dedicated registers.

The encryption key is then used to encrypt the argument *Aᵢ*, step 605.

The encrypted argument *([Aᵢ]_{Ai Key}),* the key offset (*Aᵢ key offset)* and the key length (*Aᵢ key length)* are pushed onto the calling stack 401 (illustrated in Figure 4), step 607.

Control is transferred to the callee, step 609, and execution of the callee code commences, step 615.

When an argument is encountered during the execution of the callee code, step 615, the callee determines that an argument has been encountered, step 614, determines the decryption key by popping the Key Offset, the Key Length and Return Pointer from the stack, step 611, and decrypts the arguments *Aᵢ,* step 613 as arguments are encountered during the execution of the callee code. In the illustrated embodiment arguments are decrypted when their values are first required by the callee. In an alternative embodiment, arguments are decrypted before execution of the callee code. However, it is preferable to decrypt the arguments as they are encountered as attacks against the code are more likely to occur while control of execution is being transferred to the callee.

If the return pointer has not been manipulated, the arguments would decrypt into the arguments placed on the stack by the caller in their encrypted form. However, if the return pointer has been manipulated, the key used to decrypt would not match the encryption key and more than likely a fault would occur thus preventing transfer of control to a potentially malicious routine located at the address newly stored in the return pointer after the manipulation.

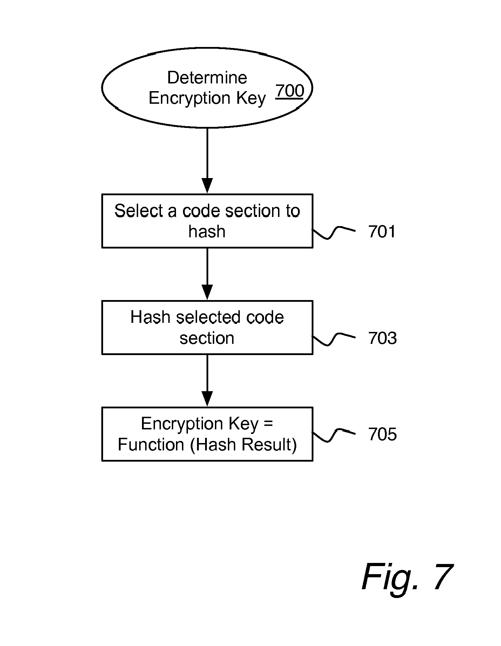

Figure 7 is a flow diagram illustrating one embodiment of a process 700 whereby the encryption/decryption key is determined by hashing a specified code section holding the calling statement. The hash result is used as the encryption/decryption key. The code-section is defined by the return-pointer. Thus, if the return-pointer has been manipulated, the code section used to produce the decryption key would not match the code section used to produce the encryption key, and one would expect the callee execution to result in a fault condition preventing transfer to the malicious routine indicated by the manipulated return pointer.

A code section is selected for hashing, step 701. The selected code section is hashed, step 703, using, for example the well-known hash function known as *Message-Digest Algorithms,* e.g., MD4 or MD5, or *Secure Hash Algorithms,* e.g., SHA-1, SHA-2, or SHA-3. The encryption/decryption key (*Aᵢ Key)* is set to the hash result, step 705.

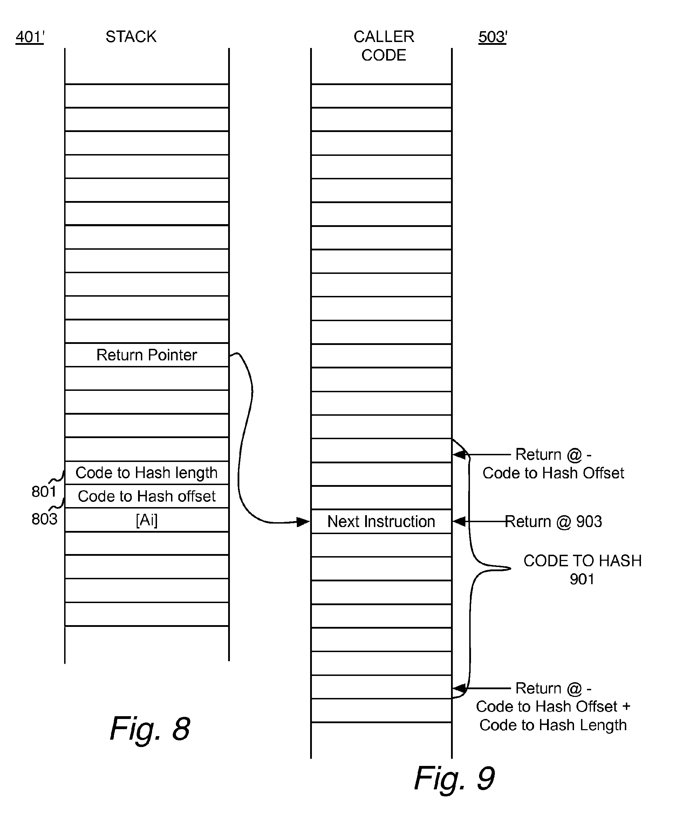

Figures 8 and 9 illustrate the stack 401' and caller code 503' corresponding to the technique of using a hash of a section of caller code for establishing the encryption/decryption key (*Aᵢ Key).* A section of code 901 is selected for hashing (Step 701). That section includes the return location 903, and as described above, is defined by an offset 803 and a length 801.

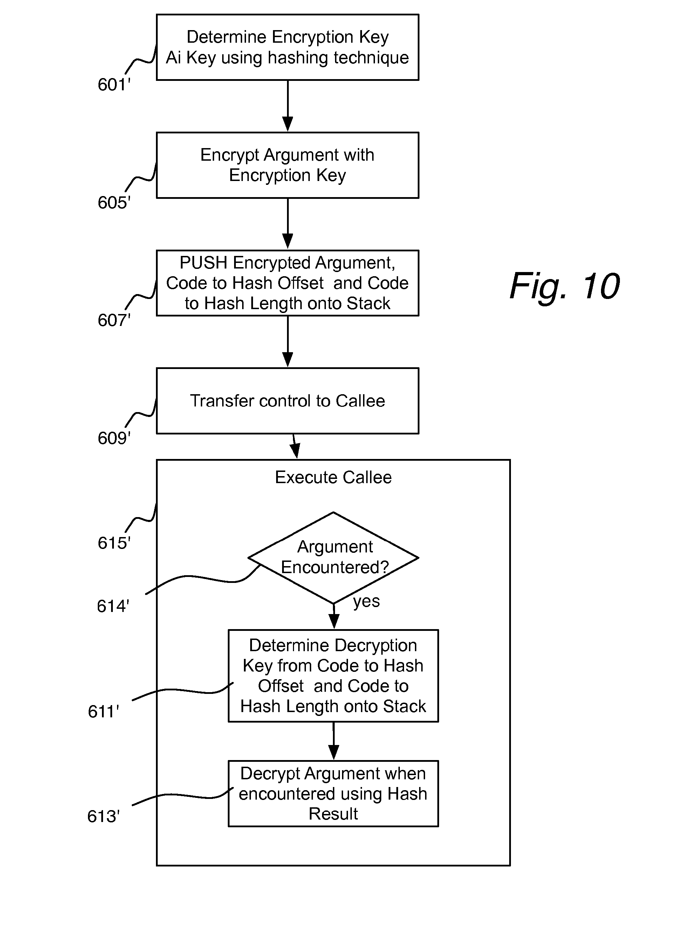

Figure 10 is a flow diagram illustrating modification to the flow diagram of Figure 6 using the technique of determining the encryption key from a hash of a code section. First, an encryption key is determined for an argument *Aᵢ,* step 601'. The encryption key may be generated using the technique of Figures 7, 8, and 9.

The encryption key is then used to encrypt the argument *Aᵢ,* step 605'.

The encrypted argument (*[Aᵢ]_{Ai Key}*), the hash offset 803 (*Aᵢ hash offset)* and the hash length 801 (*Aᵢ hash length)* are pushed onto the calling stack 401 (as illustrated in Figure 8), step 607'. Alternatively, the encrypted argument is stored and passed to the callee in a register.

Control is transferred to the callee, step 609' and execution of the callee commences, step 615'.

When the callee encounters an arguments, step 614', the callee determines the decryption key by popping the Hash Offset, the Hash Length and Return Pointer from the stack, step 611', performs the same hash function as used by the caller, and decrypts the arguments *Aᵢ* using the hash result as decryption key, step 613'.

If the return pointer has not been manipulated, the arguments would decrypt into the arguments placed on the stack by the caller in their encrypted form. However, if the return pointer has been manipulated, the hash result would be affected, and consequently the key used to decrypt would not match the encryption key and more than likely a fault would occur thus preventing transfer of control to a potentially malicious routine located at an alternative address stored in the return pointer after the manipulation.

In an alternative embodiment, the callee, in turn, encrypts the return value(s) using the same technique as described hereinabove.

Hereinabove a technology is described that protects a programmable device, e.g., a mobile communications device executing the Android or IOS operating systems, from manipulation of the return address for return from procedure calls. Thus, the technique provides an anti-tampering method that prevents a basic exploitation of the buffer overflow attack.

Although specific embodiments of the invention have been described and illustrated, the invention is not to be limited to the specific forms or arrangements of parts so described and illustrated. The invention is limited only by the claims.

## Claims

1. A method of operating an electronic device to protect against attacks that alter flow-of-control of procedure calls, the method, comprising:
by a processor of the computer:
computing an encryption key that is unique to the caller code;
encrypting an argument using the encryption key;
saving the encrypted argument in a location retrievable by the callee;
transferring control from the caller code to the callee routine;
determining the decryption key; and
processing the encrypted argument by decrypting the argument using the decryption key.

2. The method of operating an electronic device to protect against attacks that alter flow-of-control of procedure calls of Claim 1 wherein the encryption key incorporates code statements located around the address pointed to by the return address to which control is returned upon normal execution of the callee routine.

3. The method of operating an electronic device to protect against attacks that alter flow-of-control of procedure calls of Claim 1 or 2, wherein the step of computing an encryption key that is unique to the caller code, comprises:
selecting a section of code of the caller code that includes the return address to which control is returned upon completion of the callee code; and
hashing the selected section of code and setting the encryption key to be a function of the hash result.

4. The method of operating an electronic device to protect against attacks that alter flow-of-control of procedure calls of Claim 1 or Claim 3, further comprising:
placing information identifying the code to be hashed on the stack.

5. The method of operating an electronic device to protect against attacks that alter flow-of-control of procedure calls of Claim 4, wherein the information identifying the code to be hashed is an offset and a length of the code to be hashed.

6. The method of operating an electronic device to protect the arguments on a stackframe during a procedure call from a caller routine to a callee routine of Claim 4 or Claim 5 wherein the step of determining the decryption key comprises:
hashing the code identified to be hashed and setting the decryption key to be a function of the hash result.

7. The method of operating an electronic device to protect against attacks that alter flow-of-control of procedure calls of Claim 3 further comprising:
storing the encryption key at a specified location defined by a key offset;
placing the key offset and key length on the stack; and
wherein determining the decryption key comprises retrieving the key based on the key offset and the key length.

8. The method of operating an electronic device to protect against attacks that alter flow-of-control of procedure calls of any preceding claim, wherein the location retrievable by the callee is either a location on the stack frame or a dedicated register.

9. A programmable electronic device, comprising a processor and a storage device storing instructions for the processor, the processor programmed to perform the method according to any of the foregoing claims.
